# DEMANDE DE BREVET EUROPEEN

(11) **EP 2 151 800 A1**
(43) Date de publication de la demande: **10.02.2010**
(21) Numéro de dépôt: 09166682.6
(22) Date de dépôt: 29.07.2009
(51) Int. Cl.: G06Q 30/00

(54) **Système de commande d'une opération sur un serveur distant à partir d'une action physique exercée sur une zone déterminée d'un document**

(30) Priorité: 01.08.2008 FR 0855368
(71) Demandeur: Neopost Technologies, 92220 Bagneux (FR)
(72) Inventeur: Farlotti, Laurent, 49080 PRUNIERS (FR)
(74) Mandataire: David, Alain

(57) **Abrégé**

Système pour commander automatiquement une opération déterminée au niveau d'un serveur informatique (20) à partir d'une action physique exercée sur au moins une zone déterminée d'un document (10) extrait d'un article de courrier, système comprenant :
. un circuit de communication sans fil (16) activé par l'actionnement d'au moins un actionneur (14-14F) intégré au niveau d'au moins une zone déterminée du document, et
. un modem routeur point d'accès sans fil (24) pour retransmettre vers le serveur informatique, via un réseau de communication (22), un message reçu du circuit de communication sans fil comportant au moins une donnée d'identification d'un destinataire du document et une donnée relative à l'activation de l'actionneur,

le serveur informatique réalisant l'opération déterminée en réponse au message transmis par le modem routeur point d'accès sans fil.

## Description

### Domaine de la technique

La présente invention se rapporte au domaine général du traitement de courrier et elle concerne plus particulièrement un système pour commander une opération sur un serveur distant lié à l'expéditeur d'un article de courrier à partir d'une action physique exercée sur une zone déterminée d'un document extrait de cet article de courrier par son destinataire.

### Etat de la technique

Aujourd'hui, lorsque l'on reçoit dans un article de courrier un document faisant référence à des informations complémentaires disponibles à l'adresse du site Internet de son expéditeur, il est nécessaire de copier cette adresse dans son navigateur Web pour avoir accès à ces informations supplémentaires. Si ce document ne comporte pas une telle référence, il peut alors être nécessaire de téléphoner ou encore de renvoyer une enveloppe réponse jointe au document dans l'article de courrier, ces deux opérations pouvant être au frais du destinataire du courrier.

Or, très fréquemment, ces compléments d'informations ne sont pas demandés à l'expéditeur et beaucoup de temps et d'argent peuvent ainsi être perdus, notamment par cet expéditeur, du fait de cette non-réponse.

C'est pourquoi, il est connu de d'apposer sur de tels documents des codes à barres 2D connus sous le nom de « flash code » qui une fois lu par le capteur photographique d'un téléphone portable permettent d'établir une connexion avec un serveur distant d'un site Internet pour accéder à l'information recherchée. Toutefois, cette solution est onéreuse pour le titulaire du téléphone et une fois connectée au site, la navigation sur l'écran du téléphone portable s'avère en général peu pratique et notamment fort peu adaptée à la réception d'informations parfois volumineuses.

On connaît également par la demande EP 0 986 020, un système permettant d'effectuer des actions en activant des transpondeurs RFID collés sur un objet formant télécommande, cette activation rendant possible la lecture de l'information associée au moyen d'un lecteur/interrogateur RFID relié à un ordinateur. Cette solution toutefois suppose que l'expéditeur puisse être à proximité du lecteur/interrogateur RFID.

Ainsi, il n'existe pas aujourd'hui une méthode simple et rapide permettant à l'expéditeur d'un article de courrier d'être informé dès la réception à son domicile de cet article de courrier par son destinataire et pour ce dernier de répondre à une requête ou de demander des informations complémentaires associées à un document contenu dans cet article de courrier sans nécessiter l'engagement de frais.

### Divulgation de l'invention

La présente invention a donc pour objet de remédier à cet inconvénient en proposant un système pour commander automatiquement une opération déterminée au niveau d'un serveur informatique distant à partir d'une action physique exercée sur au moins une zone déterminée d'un document, **caractérisé en ce qu**'il comprend :
- un circuit de communication sans fil supporté par ledit document et activé par l'actionnement d'au moins un actionneur disposé sous ladite au moins une zone déterminée dudit document, et
- un modem routeur point d'accès sans fil pour transmettre vers ledit serveur informatique, via un réseau de communication, un message reçu dudit circuit de communication sans fil comportant au moins une donnée d'identification d'un destinataire dudit document et au moins une donnée relative à l'activation dudit au moins un actionneur,
ledit serveur informatique distant réalisant ladite opération déterminée en réponse audit message retransmis par ledit modem routeur point d'accès sans fil.

Ainsi, sans aucune opération spécifique du destinataire autre que l'activation de contacts sur le document contenu dans l'article de courrier qu'il a reçu, l'expéditeur est informé dès réception de celui-ci de l'intérêt que son prospect porte à ses produits et peut alors lui adresser sans attendre les informations complémentaires demandées, très rapidement et sans frais, ou la commande passée. Il n'est plus nécessaire de surveiller les réponses des prospects pour faire des relances car l'absence de réponse immédiate pourra signifier une absence d'intérêt du prospect pour le contenu du courrier. Les courriers peuvent être adressés par l'administration postale ou tout autre transporteur privé.

Avantageusement, ladite donnée d'identification du destinataire est un code client stockée dans une mémoire dudit circuit de communication ou est associée à un code client dans une base de données de l'expéditeur dudit document.

Ledit circuit de communication sans fil peut être un composant semi-conducteur intégré dans ledit document ou un composant organique imprimé sur ledit document.

Dans un mode de réalisation préférentiel, ledit circuit de communication sans fil est un circuit de communication WiFi et ledit modem routeur point d'accès sans fil est un modem routeur point d'accès WiFi comportant de préférence un serveur DHCP. Ladite donnée d'identification du destinataire est alors de préférence une adresse MAC dudit circuit de communication WiFi associée à un code client dans une base de données de l'expéditeur dudit document.

Avantageusement, ladite action physique consiste en une pression exercée sur ladite zone déterminée sous laquelle est disposé ledit actionneur. Ledit document peut être une lettre ou une carte-réponse.

L'invention concerne également le document permettant une commande automatique d'une opération déterminée au niveau d'un serveur informatique distant à partir d'une action physique exercée sur au moins une zone déterminée de ce document, ledit document comportant un circuit de communication sans fil activé par l'actionnement d'au moins un actionneur disposé sous ladite au moins une zone déterminée dudit document, **caractérisé en ce que** cet actionnement a pour effet de transmettre vers un modem routeur point d'accès sans fil un message à destination dudit serveur informatique distant comportant au moins une donnée d'identification d'un destinataire dudit document et au moins une donnée relative à l'activation dudit au moins un actionneur et nécessaire à la réalisation de ladite opération déterminée. Ladite donnée d'identification du destinataire peut être un code client ou une donnée associée à ce code client et stockée dans une mémoire dudit circuit de communication lors de l'expédition dudit document ou encore un identifiant unique associé au dit circuit de communication sans fil, par exemple une adresse MAC, et associée à un code client dans une base de données de l'expéditeur lors de l'expédition dudit document.

L'invention concerne également le procédé mis en oeuvre dans le système précité au moyen de ce document.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre un exemple d'architecture de réseau permettant la mise en oeuvre de l'invention,
- la figure 2 illustre en détail la structure interne d'un document nécessaire à la mise en oeuvre de l'invention, et

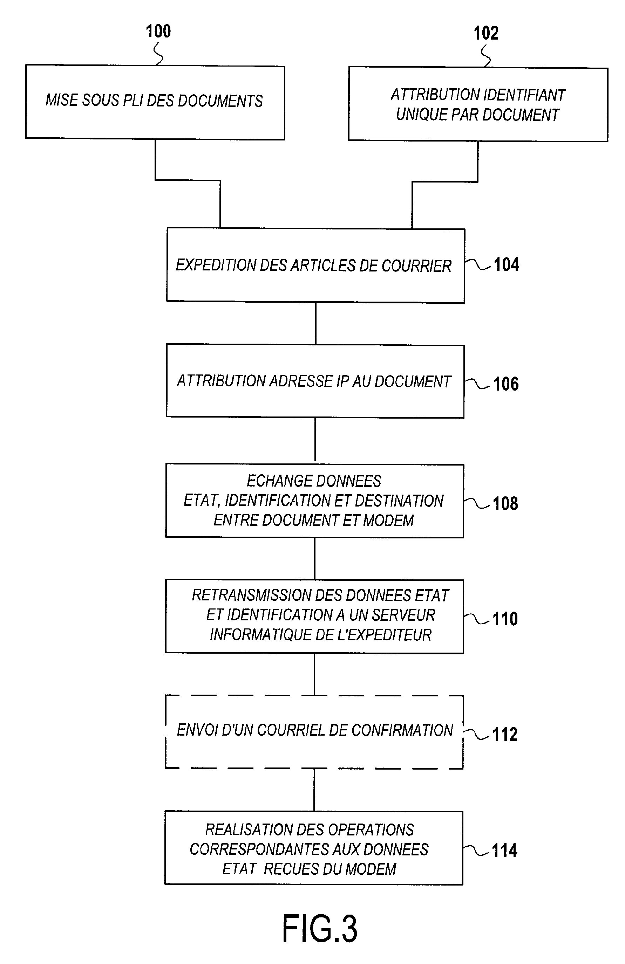

- la figure 3 montre les différentes étapes du procédé mis en oeuvre dans l'invention.

### Mode(s) de réalisation de l'invention

Le principe de l'invention repose sur l'association, au niveau du document inséré dans un article de courrier, d'éléments graphiques et électroniques et l'établissement d'une communication de données entre ce document et un serveur informatique de l'expéditeur de l'article de courrier.

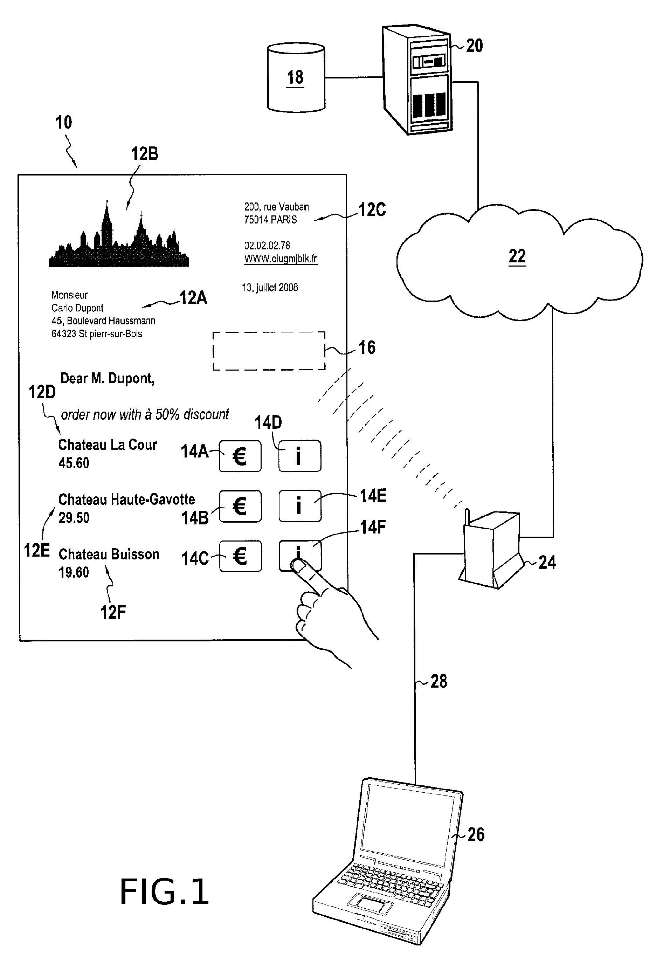

Pour cela et comme l'illustre la figure 1 qui montre l'architecture de réseau nécessaire pour la mise en oeuvre de l'invention, le document expédié 10 comporte des symboles graphiques ou alphanumériques comme l'adresse du destinataire 12A, le logo de l'expéditeur 12B, ses coordonnées 12C, et un ensemble de propositions 12D, 12E, 12F sous la forme d'offres, de requêtes ou de questions auxquelles l'expéditeur souhaite que le destinataire répondre. Dans l'exemple illustré, il s'agit de répondre à une offre d'achat de bouteilles de vin (les appellations sont de fantaisie), mais bien entendu toute autre application est envisageable, comme la réponse à un questionnaire dans le cadre d'un sondage d'opinion ou le vote de résolutions dans le cadre d'une votation par correspondance.

A chacune de ces propositions est associé un actionneur 14A, 14B, 14C ; 14D, 14E, 14F disposé de préférence en regard et identifié par un élément graphique particulier, comme l'image d'un bouton, dont une pression du doigt activera l'actionneur disposé immédiatement en dessous et constituant un moyen d'entrée d'un circuit de communication sans fil 16 destiné à récupérer des données fixes d'état (ouvert ou fermé) ou des données variables (niveau de tension par exemple) fournies par chacun des actionneurs et à transmettre à l'extérieur du document ces données accompagnées de données d'identification et de destination.

Selon l'invention, le circuit de communication sans fil est un composant semi-conducteur qui peut être facilement intégré dans le papier du document, par exemple un composant de type CMS. De façon alternative, ce composant peut aussi être directement imprimé sur le document par une technique d'impression polymère connue en électronique organique.

Pour transmettre les données émises par le circuit de communication sans fil, le destinataire de l'article de courrier doit être en possession de moyens de communication lui permettant à la fois de coopérer avec ce circuit électronique du document et d'accéder à une base de données 18 d'un serveur informatique 20 de l'expéditeur de l'article de courrier via un réseau de communications, comme le réseau Internet 22. Or, aujourd'hui la plupart des foyers en Europe et aux Etats Unis possèdent de tels moyens de communication 24 connus sous le nom de « passerelle domestique » intégrant au moins un modem routeur point d'accès sans fil et permettant d'une part, au moyen d'une interface de communication filaire, une connexion au réseau Internet et d'autre part, au moyen d'une interface de communication sans fil, une connexion sans fil à un réseau local interne.

Dans le cadre de l'invention, l'interface de communication sans fil est mise en oeuvre pour communiquer avec le circuit de communication sans fil 16 du document et l'interface de communication filaire pour communiquer avec le serveur informatique via le réseau de communication. L'interface de communication avec le réseau est classiquement une interface ADSL ou toute autre interface compatible avec le type de réseau utilisé, par exemple une interface optique pour un réseau de fibres optiques. L'interface de communication sans fil et le circuit électronique du document avec lesquels elle coopère sont bien entendu soumis à un protocole de communication commun qui peut être le protocole IEEE 802.11 (dit WiFi) ou à tout autre protocole de communication sans fil, comme l'un des protocoles IEEE 802.15 (par exemple le protocole bluethooth).

Le modem routeur point d'accès sans fil peut être un élément unique comme illustré, intégré ou non dans une passerelle domestique, ou constitué de plusieurs éléments séparés connectés un à un, par exemple un modem ADSL, un routeur Ethernet et un point d'accès sans fil. L'architecture réseau du destinataire comportera le plus souvent également au moins un ordinateur 26 (et sans doute aussi une imprimante non représentée) qui peut être relié au modem routeur point d'accès sans fil par liaison filaire au moyen d'un câble Ethernet 28 ou sans fil s'il est muni d'une interface sans fil approprié.

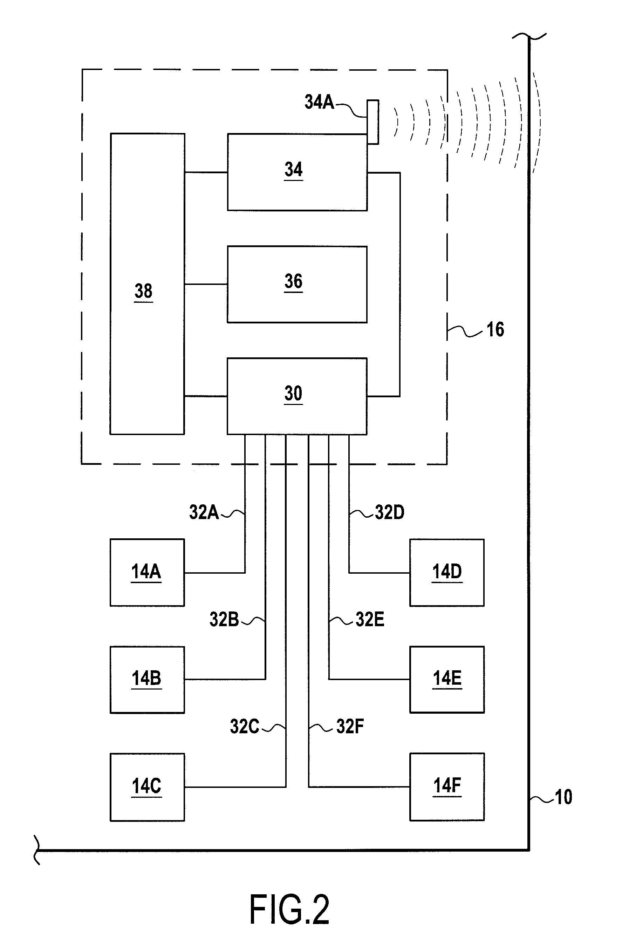

La figure 2 illustre plus en détail la structure interne du circuit de communication sans fil 16 et ses liaisons avec les actionneurs 14A-14F au niveau d'un document 10 correspondant à l'exemple de réalisation de la figure 1. Le circuit de communication sans fil comporte un processeur ou microcontrôleur 30 dont les moyens d'entrée sont constitués par les actionneurs 14A-14F auxquels il est relié par des liaisons imprimées respectives 32A, 32B, 32C, 32D, 32E, 32F et dont il est chargé d'interpréter l'état d'activation, par exemple un état ouvert ou fermé, ou encore un état intermédiaire. L'actionneur peut utiliser toutes les techniques actuelles connues pour sa mise en oeuvre y compris celle de l'électronique organique. Le processeur est relié à un émetteur sans fil 34 intégrant une antenne d'émission/réception 34A et le protocole de communication nécessaire à la liaison bidirectionnelle du circuit de communication sans fil avec le récepteur associé de l'interface de communication sans fil du modem routeur à point d'accès sans fil 24. Le processeur est également relié à une mémoire 36 de type non volatile comportant en outre les données de destination permettant l'identification du serveur informatique de l'expéditeur destinataire des données d'état des actionneurs, par exemple une adresse Internet, et aussi les données d'identification du client, un code client ou tout autre code permettant son identification comme il sera précisé plus avant. Enfin, une batterie plate 38 de type batterie de papier est prévue pour alimenter en énergie les éléments précités constituant le circuit de communication sans fil.

On notera que cette architecture avec un circuit de communication sans fil commun à tous les actionneurs n'est pas obligatoire et il pourrait être envisagé d'associer un circuit de communication sans fil individuel par actionneur. Dans cette configuration, la présence de données de destination différentes dans chacun de ces circuits de communication permet ainsi d'adresser les données d'état recueillies à des destinataires différents.

Le fonctionnement de la méthode mise en oeuvre dans l'invention sera maintenant décrit, sans que cela ne puisse être considéré comme une limitation, sur la base du protocole de communication WiFi et il conviendra donc de considérer que le circuit de communication sans fil du document expédié est un circuit de communication WiFi et que le modem routeur point d'accès sans fil est un modem routeur point d'accès WiFi. Dans le cadre de ce protocole, il conviendra aussi d'utiliser un client/serveur DHCP.

La première étape 100 est effectuée au niveau de l'expéditeur et elle consiste pour celui-ci à mettre sous pli les documents qu'il souhaite adresser à ses prospects. Chacun de ces documents comporte au moins un circuit de communication WiFi comportant un identifiant unique, de préférence l'adresse MAC, pour Medium Access Control, de ce circuit ou encore un code d'identification unique indépendant de ce circuit comme le code client ou un code associé au client destinataire du document concerné, connu de l'expéditeur et qui, dans une étape 102 (étape pouvant se dérouler parallèlement, préalablement ou à la suite de l'étape 100), est associé dans la base de données client de l'expéditeur à l'adresse postale du destinataire présente sur le document. Dans une étape suivante 104, les articles de courrier incluant ces documents sont expédiés et distribués à leur destinataire via une administration postale ou un transporteur privé.

Au niveau du destinataire, en supposant que lors de la lecture du document extrait de l'article de courrier par le destinataire, celui-ci se trouve dans le champ d'émission/réception de son modem routeur point d'accès WiFi en fonctionnement, alors, dans une étape 106, le serveur DHCP de ce modem va attribuer automatiquement et dynamiquement une ou des adresses IP au ou aux circuits de communication WiFi présents sur ce document et dans une étape suivante 108 engager l'échange des données d'activation, d'identification et de destination avec ce ou ces circuits de communication WiFi, cet échange consistant en effet en la transmission par chaque circuit de communication WiFi concerné d'un message comportant la donnée d'identification du destinataire, le code client ou un code associé ou encore un identifiant du document (par exemple son adresse MAC), les données d'activation relatives à un ou plusieurs actionneurs auxquels il est connecté et la donnée de destination, c'est-à-dire de l'adresse Internet (URL) du serveur informatique de l'expéditeur ou d'un mandataire de ce dernier auquel ce message doit parvenir.

Dans une étape suivante 110, le modem routeur point d'accès WiFi va alors retransmettre à son tour vers l'adresse Internet du serveur informatique de l'expéditeur et via le réseau Internet la partie du message comportant l'identification du destinataire, par exemple un identifiant de chaque circuit de communication WiFi concerné, comme son adresse MAC, et l'état d'activation du ou des actionneurs auxquels celui-ci est connecté.

Dans une étape finale 114, le serveur informatique de l'expéditeur à partir du message reçu et notamment du code client extrait de ce message et de l'état d'activation du ou des actionneurs, pourra effectuer les actions correspondantes à l'état de ces actionneurs, c'est-à-dire, dans l'exemple illustré, adresser une caisse des bouteilles de vin commandés. Lorsque le message reçu contient une adresse MAC ou un code associé au destinataire, l'accès à la base de données client permettra de retrouver le destinataire concerné et de procéder ensuite de même.

On notera que si le prospect est un client régulier de l'expéditeur, celui-ci peut alors disposer de son adresse de courrier électronique et lui adresser dès la réception du message en provenance du modem routeur point d'accès WiFi du destinataire, par exemple une confirmation de commande, dans une étape facultative 112, préalablement à l'envoi de celle-ci par courrier. Dans le cas contraire, il peut avoir autorisé son fournisseur d'accès à communiquer cette adresse électronique à l'expéditeur et le fournisseur d'accès intégrera alors cette dernière directement au message adressé à l'expéditeur en sus des données d'identification et de destination précitées.

## Revendications

1. Système pour commander automatiquement une opération déterminée au niveau d'un serveur informatique distant (20) à partir d'une action physique exercée sur au moins une zone déterminée d'un document (10), ledit document comportant au moins un circuit de communication sans fil (16) activé par l'actionnement d'au moins un actionneur (14A-14F) disposé sous ladite au moins une zone déterminée dudit document, **caractérisé en ce qu'**il comprend en outre un modem routeur point d'accès sans fil (24) pour transmettre vers ledit serveur informatique, via un réseau de communication (22), un message reçu dudit circuit de communication sans fil comportant au moins une donnée d'identification d'un destinataire dudit document et au moins une donnée relative à l'activation dudit au moins un actionneur, ledit serveur informatique distant réalisant ladite opération déterminée en réponse audit message retransmis par ledit modem routeur point d'accès sans fil.

2. Système selon la revendication 1, **caractérisé en ce que** ladite donnée d'identification du destinataire est un code client stocké dans une mémoire (36) dudit circuit de communication.

3. Système selon la revendication 1, **caractérisé en ce que** ladite donnée d'identification du destinataire est associée à un code client dans une base de données (18) de l'expéditeur dudit document.

4. Système selon la revendication 1, **caractérisé en ce que** ledit circuit de communication sans fil est un composant semi-conducteur intégré dans ledit document ou un composant organique imprimé sur ledit document.

5. Système selon la revendication 1, **caractérisé en ce que** ledit circuit de communication sans fil est un circuit de communication WiFi et ledit modem routeur point d'accès sans fil est un modem routeur point d'accès WiFi.

6. Système selon la revendication 5, **caractérisé en ce que** ledit modem routeur point d'accès WiFi comporte un serveur DHCP.

7. Système selon la revendication 5, **caractérisé en ce que** ladite donnée d'identification du destinataire est une adresse MAC dudit circuit de communication WiFi associée à un code client dans une base de données (18) de l'expéditeur dudit document.

8. Système selon l'une quelconque des revendications 1 à 7, **caractérisé en ce que** ladite action physique consiste en une pression exercée sur ladite zone déterminée sous laquelle est disposé ledit actionneur.

9. Système selon l'une quelconque des revendications 1 à 8, **caractérisé en ce que** ledit document est une lettre ou une carte-réponse.

10. Document (10) permettant une commande automatique d'une opération déterminée au niveau d'un serveur informatique distant (20) à partir d'une action physique exercée sur au moins une zone déterminée de ce document, ledit document comportant un circuit de communication sans fil (16) activé par l'actionnement d'au moins un actionneur (14A-14F) disposé sous ladite au moins une zone déterminée dudit document, **caractérisé en ce que** cet actionnement a pour effet de transmettre vers un modem routeur point d'accès sans fil (24) un message à destination dudit serveur informatique distant comportant au moins une donnée d'identification d'un destinataire dudit document et au moins une donnée relative à l'activation dudit au moins un actionneur et nécessaire à la réalisation de ladite opération déterminée.

11. Document selon la revendication 10, **caractérisé en ce que** ladite donnée d'identification du destinataire est un code client ou une donnée associée à ce code client.

12. Document selon la revendication 10, **caractérisé en ce que** ladite donnée d'identification du destinataire est un identifiant unique associé au dit circuit de communication sans fil, par exemple une adresse MAC.

13. Procédé de commande automatique d'une opération déterminée au niveau d'un serveur informatique distant (20) à partir d'une action physique exercée sur au moins une zone déterminée d'un document (10), ledit document comportant au moins un circuit de communication sans fil (16) activé par l'actionnement d'au moins un actionneur (14A-14F) disposé sous ladite au moins une zone déterminée dudit document, procédé dans lequel un modem routeur point d'accès sans fil (24) transmet vers ledit serveur informatique, via un réseau de communication (22), un message reçu dudit circuit de communication sans fil comportant au moins une donnée d'identification d'un destinataire dudit document et au moins une donnée relative à l'activation dudit au moins un actionneur, ledit serveur informatique distant réalisant ladite opération déterminée en réponse audit message retransmis par ledit modem routeur point d'accès sans fil.

14. Procédé selon la revendication 13, **caractérisé en ce que** ladite donnée d'identification du destinataire est un code client ou une donnée associée à ce code client et stockée dans une mémoire (36) dudit circuit de communication lors de l'expédition dudit document.

15. Procédé selon la revendication 13, **caractérisé en ce que** ladite donnée d'identification du destinataire est un identifiant unique associé au dit circuit de communication sans fil, par exemple une adresse MAC, et associée à un code client dans une base de données (18) de l'expéditeur lors de l'expédition dudit document.
